# EUROPÄISCHE PATENTSCHRIFT

(11) **EP 3 818 030 B1**
(45) Veröffentlichungstag und Bekanntmachung des Hinweises auf die Patenterteilung: **11.09.2024**
(21) Anmeldenummer: 19748660.8
(22) Anmeldetag: 05.07.2019
(51) Int. Cl.: C05C 3/00, C05F 3/00, C05C 11/00

(54) **FESTES RIESELFÄHIGES MEHRKOMPONENTENGRANULAT, VERFAHREN ZUM HERSTELLEN EINES FESTEN RIESELFÄHIGEN MEHRKOMPONENTENGRANULATES UND VOLLWERTIGES DÜNGERGRANULAT**
SOLID POURABLE MULTI-COMPONENT GRANULAR MATERIAL, METHOD FOR PRODUCING A SOLID POURABLE MULTI-COMPONENT GRANULAR MATERIAL AND COMPLETE FERTILIZER GRANULAR MATERIAL
GRANULÉ À PLUSIEURS CONSTITUANTS SOLIDE COULANT, PROCÉDÉ DE PRÉPARATION D'UN GRANULÉ À PLUSIEURS CONSTITUANTS SOLIDE COULANT ET GRANULÉ D'ENGRAIS COMPLET

(30) Priorität: 06.07.2018 DE 102018116414
(43) Veröffentlichungstag der Anmeldung: 12.05.2021
(73) Patentinhaber: John, Saskia Ludovica Elise, 28357 Bremen (DE)
(72) Erfinder: FRITSCHING, Udo, 28357 Bremen (DE); MIESSNER, Ulrich, 28865 Lilienthal (DE); HARTMANN, Dietrich, 28865 Lilienthal (DE); JOHN, Saskia Ludovica Elise, 28357 Bremen (DE)
(74) Vertreter: Weidner Stern Jeschke
(86) Internationale Anmeldenummer: PCT/DE2019/200072
(87) Internationale Veröffentlichungsnummer: WO 2020/007426

(56) Entgegenhaltungen:
- DE-C1- 4 444 726
- US-A1- 2015 329 399
- US-B1- 6 409 788

## Beschreibung

Die Erfindung betrifft ein festes rieselfähiges Mehrkomponentengranulat, wobei das feste rieselfähige Mehrkomponentengranulat einen biogenen Reststoff mit organischer Substanz und ein Adsorptionsmittel aufweist. Des Weiteren betrifft die Erfindung ein Verfahren zum Herstellen eines festen rieselfähigen Mehrkomponentengranulates aus einem flüssigen biogenen Reststoff sowie ein vollwertiges Düngergranulat.

In der Landwirtschaft fallen nährstoffhaltige Abfälle und Reststoffe biogenen Ursprungs, wie beispielsweise Gülle, Gärreste und/oder Faulschlamm an, welche häufig nicht am Anfallort verwertet und/oder zurück in den Nährstoffkreislauf gebracht werden können. Beispielsweise fallen in Überschussregionen mit Massentierhaltung derartig große Mengen an Gülle an, dass diese vor Ort aufgrund gesetzlicher Vorschriften und der Gefahr von Auswaschungen und Anreicherung beispielsweise von Nitrat in Grundwasser, nicht auf landwirtschaftlichen Flächen ausgebracht werden können. Andererseits besteht in Bedarfsregionen, zum Beispiel mit überwiegendem Pflanzen- und Ackerbau, ein erhöhter Nährstoffbedarf, welcher direkt vor Ort nicht gedeckt werden kann. Somit muss Gülle in Überschussregionen gelagert, andersseitig verwertet oder in Bedarfsregionen transportiert werden. Ein Transport ist jedoch aufgrund des hohen Wassergehaltes sowohl ökologisch als auch ökonomisch nachteilig.

Deshalb wird mit herkömmlichen Abtrennverfahren, wie Sedimentation oder Filtration, eine Entwässerung dieser biogenen Reststoffe angestrebt. Hierbei findet mit der Trennung der Feststoff- von der Flüssigphase immer auch eine Trennung der Nährstoffe Phosphor und Stickstoff statt, da Phosphor vorwiegend in der organischen Substanz, insbesondere in biologischen Zellen, gebunden ist und somit in der Feststoffphase verbleibt, während der Stickstoff in Form von Harnstoff, Ammoniak, Nitrit und/oder Nitrat in der wässrigen Phase vorliegt. Somit weist die entwässerte Feststoffphase stets nicht mehr die originäre Nährstoffzusammensetzung auf.

Alternativ zur mechanischen Trennung ist eine Trocknung von biogenen Reststoffen auch bei Temperaturen von deutlich unter 100 °C bekannt, bei der aufgrund des physikalischen Gleichgewichtes Ammonium/Ammoniak der Stickstoff fast vollständig als Ammoniak in die Abluft übergeht. Zur Rückgewinnung des Stickstoffes aus der Abluft ist die Kondensation und Schwefelsäurezugabe unter Bildung von Ammoniumsulfat als wässrige Lösung bekannt. Nachteilig hierbei sind der hohe Säureverbrauch sowie die Veränderung des getrockneten Reststoffes bezüglich seiner originären Inhalts- und Nährstoffe. Infolgedessen kommt es bei Wiedereinbringen der getrockneten, säurebehandelten Reststoffe in den Boden zu Aufsalzungen und Auswaschungen in den Grundwasserleiter und die angrenzenden Gewässer.

Zudem muss für ein Ausbringen des derart behandelten Reststoffes in der Landwirtschaft, dieser nach dem Trocknen in mindestens einem weiteren Behandlungsschritt pelletiert und/oder granuliert werden.

In der WO 96/06060 A1 ist ein Verfahren zum Aufbereiten von Bioschlämmen zu einem festen Dünge- und Bodenverbesserungsmittel beschrieben, wobei ohne thermische Trocknung der vorentwässerte Bioschlamm mit schichtsilikatischen quellfähigen Bindemitteln und Gesteinsmehl vermischt und anschließend dieses Gemisch zur Pelletierung in eine Hochdruck-Agglomerationsvorrichtung durch Presskanäle gepresst wird, wobei Temperaturen von mehr als 100 °C entstehen.

Aus der DE 10 2011 010 329 A1 ist ein wasserspeicherndes Kompositmaterial zur Verwendung als Düngemittel bekannt, welches feste und/oder flüssige Gärreste und ein Hydrogel-Komposit als Superabsorber-Polymer aufweist. Das Kompositmaterial wird durch einen Misch- und/oder Knetprozess mittels Mischer hergestellt, wobei die Gärreste bevorzugt einen Wassergehalt von > 75 Gew.-% aufweisen. Anschließend erfolgt ein Wasserentzug unter Vakuum im Mischer oder mittels einer Umlufttrocknung bei Temperaturen von 35 bis 50 °C. Abschließend muss das Kompositmaterial in einem weiteren Schritt durch ein Kompaktierungsverfahren zu Pellets und/oder Granulat umgeformt werden. Um im Wasser gelöstes Ammoniak sowie flüchtiges Ammoniak während der Herstellung zu binden, können Zeolithe der Hydrogel-Komposite zugesetzt werden. Nachteilig bei diesen Verfahren sind die Vielzahl an Verfahrensschritten sowie die abschließende herkömmliche Kompaktierung zu Pellets und/oder Granulat.

In der DE 39 37 039 A1 ist ebenfalls ein mehrstufiges Verfahren zur Entsorgung von Flüssigmist beschrieben, bei dem der Flüssigmist zunächst mechanisch grob entwässert und konditioniert wird und anschließend mittels einer Filterpresse in eine wässrige Phase und eine Trockensubstanz aufgespalten wird. Die filtrierte wässrige Phase wird anschließend in einem Warmluftstrom, beispielsweise einem Sprühturm, getrocknet und dadurch feinpulvrige Feststoffe gewonnen. Diese werden entweder der Entsorgung zugeführt oder durch weitere nachgeschaltete Veredlungsschritte werden höherwertige Folgeprodukte für Düngezwecke erzeugt. Nachteilig ist auch hier die Notwendigkeit der Vielzahl an Behandlungsstufen sowie die Veränderung der originären Nährstoffzusammensetzung.

Die Bindung von Ammoniak an Zeolith ist ebenfalls aus der EP 1 577 269 A1 bekannt, wobei Zeolith als Prozessstabilisator beim Abbau von Gärsubstrat zur Methangasgewinnung und zum Senken der Ammoniak- und Schwefelwasserstoffkonzentration im Biogas eingesetzt wird, um eine Reduzierung der Methanausbeute aufgrund einer Hemmung der Methangasbakterien durch Ammoniak und Schwefelwasserstoff zu verhindern.

Zudem wird in der EP 2 464 614 B1 ein Verfahren zum Herstellen von mit Mineralstoffen beladenen Kohlepartikeln aus einer Biogasanlage zur Verwendung als Bodenverbesserungsmittel beschrieben.

In der DE 44 44 726 C1 ist ein Verfahren zum Aufbereiten von Gülle offenbart, bei dem der Gülle durch Mischen mit Tonmehl Wasser entzogen und diese verfestigt wird sowie eine zeitliche Bindung der in der Gülle enthaltenen organischen Verbindungen, Stickstoffe und weitere Stoffe bewirkt wird, welche jedoch langsam durch Auswaschung mit Wasser wieder freigegeben werden.

Die US 6 409 788 B1 offenbart ein mehrstufiges Verfahren zum Behandeln von organischen Abfällen unter Zugabe von Fällungs-, Flockungs-, Verdichtungsmitteln und optional ein Ammoniakrückhaltemittel, wie Zeolith, zur verbesserten Trennung der Wasser- und der Feststoffphase. Das entstandene Fällungsprodukt als Feststoff wird gepresst, konventionell getrocknet und pelletiert und anschließend über Vibrationssiebe granuliert. Als Verdichtungsmittel zur Verbesserung der Fest-/Flüssig-Trennung kann unter anderen Zeolith verwendet werden. Zudem kann Zeolith zum Futter von Vieh im Stall zugegeben werden, um die Luftqualität im Stall zu verbessern.

Aufgabe der Erfindung ist es, den Stand der Technik zu verbessern.

Gelöst wird die Aufgabe, gemäß Anspruch 1, durch ein festes rieselfähiges Mehrkomponentengranulat, wobei das feste rieselfähige Mehrkomponentengranulat einen biogenen Reststoff mit organischer Substanz und ein Adsorptionsmittel aufweist, wobei das Adsorptionsmittel Zeolith aufweist, und das Zeolith mit einem Nährstoff beladen ist, wobei der Nährstoff Ammoniak ist, und die organische Substanz des biogenen Reststoffes mit dem Zeolith physikalisch verbunden ist, wobei das feste rieselfähige Mehrkomponentengranulat eine Korngröße in einem Bereich von 250 um bis 10 mm aufweist, wobei das Zeolith eine Ammoniak-Beladung von wenigstens 60 % des zuvor in einer Abluft vorhandenen Stickstoffs aufweist und das beladene Zeolith von dem biogenen Reststoff mittels der organischen Substanz umhüllt ist, sodass das feste rieselfähige Mehrkomponentengranulat als mit Nährstoffen vollwertig angereicherter Dünger vorliegt. Weiterhin werden ein Verfahren zum Herstellen eines festen Mehrkomponentengranulates, gemäß Anspruch 3, und ein Vollwertiges Düngergranulat, gemäß Anspruch 13, offenbart.

Durch die physikalische Verbindung der organischen Substanz des biogenen Reststoffes mit dem Adsorptionsmittel behält das feste rieselfähige Mehrkomponentengranulat auch bei einer mechanischen Belastung, beispielsweise beim Ausbringen auf eine landwirtschaftliche Fläche, seine Struktur und Form.

Im Gegensatz zu nach dem Stand der Technik hergestellten Pellets und/oder Granulaten lässt sich folglich das feste rieselfähige Mehrkomponentengranulat nicht durch mechanischen Stress oder durch mechanische Verfahren wieder in seine einzelnen Bestandteile trennen.

Somit weist das feste rieselfähige Mehrkomponentengranulat eine hohe mechanische Beständigkeit beim Verpacken, Lagern und/oder Verwenden auf.

Dadurch kann das feste rieselfähige Mehrkomponentengranulat nicht nur direkt vor Ort verwendet, sondern auch über weite Strecken transportiert werden.

Für eine sehr hohe mechanische Beständigkeit ist es besonders vorteilhaft, wenn die organische Substanz des biogenen Reststoffes direkt an das Adsorptionsmittel physikalisch gebunden ist.

Ein wesentlicher Gedanke der Erfindung beruht darauf, dass über die organische Substanz des biogenen Reststoffes eine physikalische Verbindung zwischen den Bestandteilen des biogenen Reststoffes und dem Adsorptionsmittel hergestellt wird, sodass ein kompaktiertes mit biogenem Reststoff umhülltes Adsorptionsmittel vorliegt.

Folgendes Begriffliche sei erläutert:

Ein "Granulat" ist insbesondere ein körniger bis pulverförmiger, leicht schüttbarer Feststoff. Ein Granulat ist insbesondere eine Ansammlung von Festkörpern. Granulat besteht insbesondere aus vielen kleinen, festen Partikeln, wie Körnern oder Kugeln. Die einzelnen Partikel des Granulats treten insbesondere über Kontaktkräfte und/oder Reibungskräfte in Wechselwirkung.

Ein "Mehrkomponentengranulat" ist insbesondere ein Granulat, bei dem jedes einzelne Partikel aus mindestens zwei Komponenten oder mehreren Komponenten besteht. Das Mehrkomponentengranulat weist insbesondere biogenen Reststoff mit organischer Substanz, ein Adsorptionsmittel sowie gegebenenfalls weitere Zuschlagsstoffe, wie Füllstoffe und/oder weitere organische Substanz, auf. Das Mehrkomponentengranulat weist in Abhängigkeit auch der Ursprungsart der organischen Substanz und/oder der eingesetzten Partikelgröße des Adsorptionsmittels eine Korngröße von 250 µm bis 10 mm, bevorzugt von 2 bis 6 mm, auf.

"Fest" bedeutet insbesondere, dass das Mehrkomponentengranulat in einem festen Aggregatzustand, insbesondere bei einer Temperatur von 20 °C, vorliegt.

"Rieselfähig" bedeutet insbesondere, dass das Mehrkomponentengranulat in schüttfähiger Form vorliegt und eine freie Beweglichkeit und/oder ein Fließverhalten aufweist. Die Rieselfähigkeit wird beispielsweise messtechnisch mittels eines Messtrichters bestimmt, bei dem die Rieselzeit bei vorgegebener Masse oder Volumen gemessen wird.

Unter "biogen" wird verstanden, dass ein Reststoff biologischen und/oder organischen Ursprungs ist. Ein biogener Reststoff weist insbesondere Material pflanzlicher und/oder tierischer Herkunft auf.

Bei einem "biogenen Reststoff" handelt es sich insbesondere um Gülle, Gärreste, Faul-, Bio- und/oder Klärschlamm, Abfallprodukte und/oder Reststoffe aus der Lebensmittel-, Naturstoff- und/oder Holzverarbeitung.

Unter einer "organischen Substanz" (auch "organischer Stoff") wird insbesondere ein Stoff verstanden, welcher Kohlenstoff in Kombination mit Wasserstoff aufweist. Eine organische Substanz ist insbesondere natürlichen Ursprungs und entstammt der Photosynthese und/oder Abbauprozesses der bei der Photosynthese gebildeten Stoffe. Bei einer organischen Substanz kann es sich insbesondere auch um einen Naturstoff, wie einen pflanzlichen oder tierischen Farbstoff, Zucker, Fette, Proteine und/oder Nukleinsäuren handeln. Unter einer organischen Substanz fällt auch Humus, Huminstoff und/oder Huminsäure.

Ein "Adsorptionsmittel" (auch "Adsorbens") dient zur Anlagerung und/oder Entfernung eines Stoffes aus einem Gas und/oder einer Flüssigkeit. Der anzulagernde Stoff lagert sich insbesondere aufgrund von Van-der-Waals-Kräften adsorptiv an der Oberfläche des Adsorptionsmittels an. Somit dient das Adsorptionsmittel insbesondere zur Anreicherung von Stoffen aus Gasen oder Flüssigkeit an der Oberfläche des Adsorptionsmittels als Feststoff. Ein Adsorptionsmittel ist insbesondere ein kohlenstoffhaltiges Adsorbens, wie Aktiv- oder Biokohle, oder ein oxydisches Adsorbens, wie Aktivtonerde, Kieselgel oder Zeolith. Ein Adsorptionsmittel kann insbesondere natürlichen oder synthetischen Ursprungs sein. Des Weiteren kann das Adsorptionsmittel modifiziert, indem beispielsweise oxydische Struktur aufgebracht wird, und/oder vorbehandelt, beispielsweise gewaschen mit Wasser, sein. Bei einem Adsorptionsmittel handelt es sich insbesondere um natürliche, synthetisch hergestellte und/oder modifizierte Zeolithe.

Unter "physikalisch verbunden" wird insbesondere verstanden, dass die organische Substanz des biogenen Reststoffes durch Oberflächenkräfte und/oder Van-der-Waals-Kräfte mit, auf und/oder an das Adsorptionsmittel gebunden wird. Die physikalische Bindung findet insbesondere durch Physisorption statt, bei welcher die wirkenden elektrostatischen Kräfte schwächer sind als bei einer chemischen Bindung. Jedoch sind bei der Physisorption auch größere Bindungsenergien möglich, beispielsweise aufgrund von Wechselwirkungen mit festen Dipolen an polaren Oberflächen und/oder elektrisch leitfähigen Oberflächen. Bei der physikalischen Bindung tritt insbesondere nur eine geringe Veränderung der organischen Substanz des biogenen Reststoffes und des Adsorptionsmittels auf. Die physikalische Bindung lässt sich insbesondere nicht durch mechanische Verfahren trennen. Durch die physikalische Bindung wird insbesondere das Adsorptionsmittel mit einer Schicht aus biogenem Reststoff umhüllt ("gecoatet").

Gemäß der Erfindung das Adsorptionsmittel mit einem Nährstoff beladen, sodass das feste rieselfähige Mehrkomponentengranulat als mit Nährstoffen vollwertig angereichter Dünger vorliegt.

Es ist besonders vorteilhaft, dass durch Beladung des Adsorptionsmittels mit mindestens einem Nährstoff eine gewünschte Nährstoffmenge im festen rieselfähigen Mehrkomponentengranulat eingestellt und mit Nährstoffen soweit angereichert werden kann, dass das feste rieselfähige Mehrkomponentengranulat einen vollwertigen Dünger darstellt.

Unter "Nährstoff" wird insbesondere ein organischer oder anorganischer Stoff verstanden, welcher von einem Lebewesen zu dessen Lebenserhaltung aufgenommen und im Stoffwechsel verarbeitet wird. Bei einem Nährstoff handelt es sich insbesondere um einen anorganischen oder organischen Stoff, welcher von einer Pflanze zum Wachstum benötigt wird. Gemäß der Erfindung ist der Nährstoff zumindest Ammoniak. Ein weiterer Nährstoff ist beispielsweise Phosphor und seine Verbindungen, wie beispielsweise Phosphat, und/oder Stickstoff und seine Verbindungen, wie beispielsweise Ammonium, Nitrat und/oder Nitrit. Ein Nährstoff lag insbesondere bereits in derselben oder ähnlicher Zusammensetzung und/oder Menge im biogenen Reststoff originär vor.

Ein "Dünger" (oder "Düngemittel") ist insbesondere ein Reinstoff oder ein Stoffgemisch, welches in der Land- und Forstwirtschaft und/oder im Gartenbau eingesetzt wird, um das Nährstoffangebot für die angebauten Pflanzen und/oder Kulturpflanzen bereitzustellen und/oder zu ergänzen. Ein Dünger ist insbesondere vollwertig mit Nährstoffen angereichert und besteht aus dem festen rieselfähigen Mehrkomponentengranulat. Bei einem Dünger handelt es sich insbesondere auch um einen Wirtschaftsdünger mit voller Nährstoffzusammensetzung und/oder Bodenverbesserungseigenschaften.

Um eine ausreichende Ammoniakversorgung der Pflanzen zu erreichen, weist das Adsorptionsmittel eine Ammoniak-Beladung bevorzugt von wenigstens 1,5 mg N pro g Adsorptionsmittel und von wenigstens 60 % des zuvor in einer Abluft vorhandenen Stickstoffs auf.

Somit liegt ein höherwertiger, nährstoff- und insbesondere ammoniakhaltiger sowie fester und somit transportwürdiger Dünger vor.

Unter "Ammoniak-Beladung" wird insbesondere die Masse Ammoniak verstanden, welche im Gleichgewichtszustand auf der spezifischen BET-Oberfläche des Adsorptionsmittels oder auf der Masse des Adsorptionsmittels gebunden wird. Ammoniak wird hierbei insbesondere als Stickstoff (N) angegeben.

Beispielsweise werden bei einem Zeolith eines Korngrößenbereichs von 1 bis 5 mm Beladungen von mindestens 1,5 bis mindestens 8 mg N / g Zeolith (Klinoptilolith) erreicht. Hierbei wird die Oberfläche des verwendeten Zeoliths nach Literaturangaben auf ca. 600 m²/g geschätzt. Klinoptilolith als Zeolith weist nach verschiedenen Quellen in der Regel eine BET-Oberfläche zwischen 500 m²/g - 1000 m²/g je nach geologischen Ursprung und Mahlgrad auf. Somit ergibt sich eine Ammoniak-Beladung von 3 bis 16 g N pro m² BET-Oberfläche des Klinoptilolith als Adsorptionsmittel. Hierbei wurde die Beladung mittels eines Versuchsaufbaus ermittelt, in dem aus einer Gasstrippingeinheit ein mit N (Ammoniak) beladener Gasstrom über eine definierte Schüttung des Zeoliths geführt wurde und die bekannten Massenkonzentrationen in Vorlage und Abluftstrom ("Saure Wäsche") mittel Küvettentests bilanziert wurden.

Als "BET-Oberfläche" wird die Oberfläche verstanden, welche nach der BET-Methode bestimmt wird. Hierbei wird insbesondere die massenbezogene spezifische Oberfläche aus experimentellen Daten berechnet.

Bei der "Abluft" handelt es sich insbesondere um die Abluft aus einem Trocknungsprozess, in welchem ein biogener Reststoff getrocknet wird und hierbei Stickstoff aus dem biogenen Reststoff als Ammoniak in die Abluft übergeht oder übergegangen ist. Die Abluft ist bevorzugt die Abluft eines Trocknungsraums oder Vortrocknungsraums. Der in die Abluft übergegangene Ammoniak wird überwiegend vom Adsorptionsmittel aufgenommen und dieses somit beladen.

In einem weiteren Aspekt der Erfindung wird die Aufgabe gelöst durch ein Verfahren zum Herstellen eines festen rieselfähigen Mehrkomponentengranulates aus einem flüssigen biogenen Reststoff, wobei der flüssige biogene Reststoff organische Substanz und Nährstoffe aufweist, mit folgendem Schritt:
- zumindest teilweises gemeinsames Trocknen des flüssigen biogenen Reststoffes und eines Adsorptionsmittels unter Zuführen einer Trocknungsluft in einem Trockenraum bei einer Temperatur in einem Bereich zwischen 60 °C bis 250 °C, bevorzugt zwischen 80 °C und 160 °C, wobei der flüssige biogene Reststoff mittels einer Zerstäubungsvorrichtung in dem Trocknungsraum versprüht und eine Wirbelschichtsprühgranulation des flüssigen biogenen Reststoffes durchgeführt wird, das Adsorptionsmittel mit dem bei dem Trocknen in die Trocknungsluft übergegangenen Ammoniak aus der Trocknungsluft beladen wird, und die organische Substanz des trocknenden biogenen Reststoffes mit dem beladenen Adsorptionsmittel physikalisch verbunden und das beladene Adsorptionsmittel von dem biogenen Reststoff mittels der organischen Substanz umhüllt wird, sodass ein festes rieselfähiges Mehrkomponentengranulat vorliegt, wobei das feste rieselfähige Mehrkomponentengranulat eine Korngröße in einem Bereich von 250 um bis 10 mm aufweist.

Somit kann in einem einzigen Verfahrensschritt ein festes rieselfähiges Mehrkomponentengranulat hergestellt werden.

Durch die physikalische Bindung der organischen Substanz des biogenen Reststoffes mit dem Adsorptionsmittel wird das Adsorptionsmittel mit dem biogenen Reststoff, beispielsweise Gülle, umhüllt und gecoatet, sodass granulierte und/oder pulverförmige Gülle vorliegt.

Dadurch, dass beim Trocknen der Stickstoff aus dem flüssigen biogenen Reststoff als Ammoniak in die Gasphase übergeht und durch die gleichzeitige Anwesenheit des Adsorptionsmittels im Trockenraum oder einem nachgelagerten Raum direkt an das Adsorptionsmittel adsorbiert, weist das feste rieselfähige Mehrkomponentengranulat gleichzeitig einen hohen Nährstoffgehalt auf. Zudem wird durch eine Trocknungstemperatur von insbesondere kleiner 150 °C, bevorzugt zwischen 60 °C und 100 °C, die Menge an Stickstoff, welche als Ammoniak in die Gasphase und somit in die Trocknungsluft übergeht, reduziert.

Die Trocknungstemperatur hängt jedoch auch von der Art des biogenen Reststoffes ab. Beispielsweise kann bei Klärschlamm ein Trocknen bei einer Temperatur von größer 150 °C vorteilhaft sein.

Unter "flüssig" ist insbesondere zu verstehen, dass der biogene Reststoff einen flüssigen Aggregatzustand aufweist, insbesondere bei einer Temperatur von 20 °C. Somit können sich die Teilchen des biogenen Reststoffes gegeneinander verschieben. Der flüssige biogene Reststoff weist insbesondere auch Feststoffe und/oder makromolekulare Substanzen, die mit dem Summenparameter CSB (Chemischer Sauerstoffbedarf) erfasst werden können, in der flüssigen Phase auf.

Unter "Trocknen" wird insbesondere ein Entzug von Flüssigkeit und/oder Wasser aus dem flüssigen biogenen Reststoff und/oder dem Adsorptionsmittel verstanden. Beim Trocknen finden insbesondere eine Verringerung der Feuchtigkeit und eine thermisch-physikalische Umwandlung der Flüssigkeit in den gasförmigen Zustand statt. Das Trocknen findet insbesondere durch Verdunstung und/oder Verdampfung statt. Beim Trocknen wird insbesondere zum Durchmischen und/oder Abführen von Wasserdampf und/oder Ammoniak eine Trocknungsluft dem Trocknungsraum zugegeben. Bei dem zumindest "teilweise gemeinsamen Trocknen" findet der Flüssigkeitsentzug aus dem flüssigen biogenen Reststoff und dem Adsorptionsmittel zusammen und zeitgleich im selben Trocknungsraum statt, wobei der Flüssigkeitsentzug beim gemeinsamen Trocknen nicht vollständig bezüglich jeweils des flüssigen biogenen Reststoffes und des Adsorptionsmittels erfolgen muss.

Ein "Trocknungsraum" ist insbesondere ein Apparat, Behälter und/oder Raum, in dem das Trocknen des flüssigen biogenen Reststoffes und/oder des Adsorptionsmittels stattfindet. Bei einem Trocknungsraum kann es sich beispielsweise um einen Sprühtrockner, Wirbelschichtsprühgranulationstrockner, Trommeltrockner, Wandtrockner und/oder Schaufeltrockner handeln.

Nach dem gemeinsamen Trocknen weist das hergestellte feste rieselfähige Mehrkomponentengranulat insbesondere eine Restfeuchte im Bereich von 10 bis 28 %, bevorzugt von 15 bis 20 % auf.

Um das Trocknen des flüssigen biogenen Reststoffes zu beschleunigen und/oder spezifisch an den flüssigen biogenen Reststoff anzupassen, erfolgt vor dem gemeinsamen Trocknen ein Vortrocknen des flüssigen biogenen Reststoffes, sodass ein vorgetrockneter biogener Reststoff vorliegt.

Somit kann der flüssige biogene Reststoff zunächst separat teilweise getrocknet werden, bevor dieser als vorgetrockneter biogener Reststoff mit dem Adsorptionsmittel vermischt und/oder zusammen weitergetrocknet wird.

Folglich kann der Verfahrensschritt des Vortrocknens optimal auf den Wassergehalt und/oder die Zusammensetzung des flüssigen biogenen Reststoffes angepasst und dadurch auch das anschließende gemeinsame Trocknen zusammen mit dem Adsorptionsmittel optimiert werden.

Hierbei weist der vorgetrocknete biogene Reststoff insbesondere eine Restfeuchte in einem Bereich von 30 bis 80 %, bevorzugt 40 % bis 60 % auf.

In einer weiteren Ausgestaltungsform des Verfahrens wird ein Abführen der Trocknungsluft aus dem Trocknungsraum und/oder ein Binden eines bei dem Trocknen und/oder bei dem Vortrocknen in die Trocknungsluft übergegangenen Nährstoffes, Ammoniak gemäß der Erfindung, aus der Trocknungsluft an das Adsorptionsmittel durchgeführt, sodass ein beladenes Adsorptionsmittel vorliegt.

Dadurch werden Nährstoffe, welche durch das Trocknen aus dem biogenen Reststoff in die Trocknungsluft und somit Abluft entweichen, an das Adsorptionsmittel gebunden, fixiert und somit in das hergestellte feste rieselfähige Mehrkomponentengranulat zurück überführt.

Um eine hohe Nährstoffmenge in dem gefertigten Produkt zu erreichen, erfolgt ein Rückführen des beladenen Adsorptionsmittels und ein Mischen mit dem flüssigen biogenen Reststoff in dem Trocknungsraum, sodass das feste rieselfähige Mehrkomponentengranulat als mit Nährstoffen vollwertig angereichter Dünger vorliegt.

Somit kann mit nur zwei Verfahrensschritten ein festes rieselfähiges Mehrkomponentengranulat hergestellt werden, welches vollwertig mit Nährstoffen angereichert und somit als Wirtschaftsdünger einsetzbar ist. Hierbei wird insbesondere Phosphor als weiterer Nährstoff durch den Verbleib in
und/oder an der organischen Substanz des biogenen Reststoffes in seiner ursprünglichen Menge in das hergestellte feste rieselfähige Mehrkomponentengranulat überführt, während derjenige Stickstoffanteil aus dem originären biogenen Reststoff, welcher beim Trocknen und/oder Vortrocknen in die Gasphase übergeht, durch die Adsorption am Adsorptionsmittel als Ammoniak wieder gebunden und somit ebenfalls in das hergestellte feste rieselfähige Mehrkomponentengranulat überführt wird. Somit weist das feste rieselfähige Mehrkomponentengranulat im Wesentlichen die ursprünglichen Nährstoffe in ihrer Zusammensetzung und Menge auf.

Hierbei ist es insbesondere vorteilhaft, dass ein hoher Stickstoff- und/oder Ammoniakgehalt ohne externe Zugabe von Säure und somit säurefrei refixiert werden kann. Im Gegensatz zu einem herkömmlichen Adsorptionsverfahren wird das beladene Adsorptionsmittel nicht regeneriert, sondern im beladenen Zustand physikalisch über die organische Substanz mit dem biogenen Reststoff verbunden. Hierbei wird das beladene Adsorptionsmittel insbesondere als Trocknungskeim von dem biogenen Reststoff mittels der organischen Substanz umhüllt.

Zudem fördert das feste rieselfähige Mehrkomponentengranulat als vollwertig angereicherter Dünger aufgrund der organischen Substanz auch die Humusbildung sowie insbesondere aufgrund des Adsorptionsmittels die Wasserspeicherkapazität als weitere positive Beeinflussung einer Bodeneigenschaft. Insbesondere wenn das Adsorptionsmittel natürlichen Ursprungs ist, weist dieses an sich bereits grundsätzlich bodenverbessernde Eigenschaften auf. Vor allem wird durch die Fixierung der originären Stickstofffracht des biogenen Reststoffes am Adsorptionsmittel das Pflanzenwachstum gefördert.

Somit wird ein vollwertiges und stickstoffhaltiges Produkt hergestellt, welches alle originären Nährstoffgehalte, insbesondere Stickstoff, sowie bodenverbessernde Eigenschaften (wie Struktur für Humusbildung, hygroskopisches Material für Wasserbindung und ähnliches) aufweist, in konfektionierter, granulierter Form anfällt und sowohl als transportwürdiger Dünger eingesetzt werden kann als auch als Rohstoff für weitere Verwendungszwecke zur Verfügung steht. Es ist besonders vorteilhaft, dass das produzierte feste rieselfähige Mehrkomponentengranulat als Wirtschaftsdünger mit den üblichen Ausbringtechnologien direkt auf landwirtschaftliche Flächen ausgebracht werden kann.

In einer weiteren Ausgestaltungsform des Verfahrens werden der vorgetrocknete biogene Reststoff und das beladene Adsorptionsmittel in einem Nachtrocknungsraum gemischt und/oder gemeinsam getrocknet.

Somit kann der flüssige biogene Reststoff zunächst alleine vorgetrocknet werden und der beim Vortrocknen des flüssigen biogenen Reststoffs in die Trocknungsluft übergegangene Ammoniak wird in einer nachgeschalteten Abluftbehandlung, beispielsweise in einer Adsorptionskolonne gefüllt mit dem Adsorptionsmittel, fixiert. Anschließend wird ohne Rückführung in den Vortrocknungsraum das beladene Adsorptionsmittel direkt zusammen mit dem vorgetrockneten biogenen Reststoff gemischt und gegebenenfalls weiter gemeinsam getrocknet.

Bei ausreichend hoher Temperatur beim Vortrocknen des flüssigen biogenen Reststoffes kann hierbei der vorgetrocknete biogene Reststoff noch eine ausreichend hohe Wärmeenergie aufweisen, sodass in einem unbeheizten Nachtrocknungsraum, beispielsweise ein Mischer, eine ausreichende Temperatur zur Ausbildung der physikalischen Bindung zwischen dem organischen Material des Reststoffes und des Adsorptionsmittels vorliegt. Alternativ kann der Nachtrocknungsraum auch beheizt und/oder dem Nachtrocknungsraum kann erneut Trocknungsluft zugeführt werden.

Ein "Nachtrocknungsraum" entspricht in seiner Funktion dem oben definierten Trocknungsraum, wobei der Nachtrocknungsraum alternativ oder zusätzlich auch die Funktion des Mischens aufweist. Ein Nachtrocknungsraum ist insbesondere ein Konfektionierer. Bei einem Nachtrocknungsraum kann es sich beispielsweise um eine beheizbare Schnecken-, Granulations-, Misch- oder Dosiereinrichtung handeln. Zur Unterstützung kann in den Nachtrocknungsraum trockene und/oder warme Luft mit einer Temperatur oberhalb der Umgebungstemperatur zugegeben werden. Aufgrund einer Wärmebildung durch Reibung zwischen den Partikeln beim Granulieren und/oder Mischen kann der Nachtrocknungsraum jedoch auch ohne Wärme- und/oder Luftzufuhr betrieben werden.

Um ein festes rieselfähiges Mehrkomponentengranulat und ein mit Nährstoffen vollwertig angereicherten Dünger herzustellen, wird das gemeinsame Trocknen des flüssigen biogenen Reststoffes und/oder des vorgetrockneten biogenen Reststoffes und des Adsorptionsmittels und/oder des beladenen Adsorptionsmittels bei einer Temperatur in einem Bereich bevorzugt von 60 °C bis 150 °C, bevorzugt von 80 °C bis 100°C durchgeführt.

Durch die niedrige Trocknungstemperatur geht der ursprünglich im biogenen Reststoff gebundene Stickstoff nicht vollständig als Ammoniak in die Gasphase beim Trocknen über, sondern bleibt in seiner ursprünglichen Bindungsform, beispielsweise als organisch gebundener Stickstoff, im biogenen getrockneten Reststoff vorhanden. Somit bleibt die ursprüngliche Zusammensetzung der Stickstofffracht mit ihren verschiedenen Komponenten (organisch gebunden, Ammonium, Ammoniak, Nitrat, Nitrit) weitgehend erhalten. Folglich wird die nachgeschaltete Adsorptionsstufe als Abluftbehandlung entlastet.

In einer weiteren Ausgestaltungsform des Verfahrens wird oder werden das Adsorptionsmittel und/oder das beladene Adsorptionsmittel in den Trocknungsraum oder in den Nachtrocknungsraum kontinuierlich oder diskontinuierlich zugeführt.

Ebenso kann der flüssige biogene Reststoff und/oder der vorgetrocknete biogene Reststoff kontinuierlich oder diskontinuierlich in den Trocknungsraum oder den Nachtrocknungsraum zugeführt werden.

Um eine spezifisch große Oberfläche und ein Dispergieren des flüssigen biogenen Reststoffs zu erreichen, wird der flüssige biogene Reststoff mittels einer Zerstäubungsvorrichtung in dem Trocknungsraum versprüht und eine Wirbelschichtsprühgranulation des flüssigen biogenen Reststoffes durchgeführt.

Somit wird der flüssige biogene Reststoff innerhalb des Trocknungsraums feinst zerteilt und gut mit dem Adsorptionsmittel oder dem rückgeführten beladenen Adsorptionsmittel durchmischt, um eine optimale Bindung des flüssigen biogenen Reststoffes an das Adsorptionsmittel und dessen Umhüllung zu erreichen.

Zudem wird durch das Versprühen und die Wirbelschichtgranulation ein Coating und/oder Umhüllen des mit Ammoniak beladenen Adsorptionsmittels erzielt, welches ein frühzeitiges Freisetzen des an dem Adsorptionsmittel gebundenen Ammoniaks an die Trocknungsluft verhindert. Dadurch wird im hergestellten Düngeprodukt später eine gleichmäßige Abgabe der Stickstofffracht von dem beladenen Adsorptionsmittel an den zu düngenden Boden erreicht.

Des Weiteren wird durch die Wirbelschichtsprühgranulation eine optimale Konfektionierung in ein schüttfähiges, transportwürdiges, weitgehend wasserfreies Produkt erzielt, welches als Dünger eingesetzt oder alternativ als Trockenprodukt der thermischen Verwertung zugeführt werden kann, da dieses aufgrund seiner gleichförmigen, hohen spezifischen Oberfläche und guten Dosierbarkeit optimal in einen Verbrennungsofen eingeblasen werden kann.

Allgemein sind beim Granulieren insbesondere die Parameter Temperatur, Druck und/oder Restfeuchte für die Ausbildung eines rieselfähigen Produktes von Bedeutung. Hierbei ist nicht nur die Temperatur im Trockenraum entscheidend, sondern auch die direkt an den granulierenden Partikeln vorliegende Temperatur, beispielsweise aufgrund der Reibung zwischen den Partikeln.

Eine "Zerstäubungsvorrichtung" dient insbesondere der Zerteilung von Flüssigkeiten, Suspensionen und/oder Dispersionen in feine Tropfen. Durch eine Zerstäubungsvorrichtung wird insbesondere die spezifische freie Oberfläche vergrößert und Stoff- und/oder Wärmeaustauschvorgänge begünstigt. Bei einer Zerstäubungsvorrichtung kann es sich beispielsweise um eine Einstoff- oder Zweistoffdruckdüse, einen pneumatischen Zerstäuber und/oder einen Rotationszerstäuber handeln.

In einer "Wirbelschichtsprühgranulation" wird in einer Wirbelschicht aus biogenem Reststoff, Adsorptionsmittel und/oder beladenem Adsorptionsmittel gleichzeitig ein Zerstäuben, Trocknen und Granulieren durchgeführt. Die Wirbelschichtsprühgranulation dient insbesondere dazu, den versprühten, dispergierten biogenen Reststoff, das unbeladene und/oder beladene Adsorptionsmittel und die Trockenluft in einen engen Kontakt bei intensiver Vermischung zu bringen. Hierbei werden die Feststoffpartikel in einen fluidisierten Zustand versetzt.

Somit entfallen durch eine Wirbelschichtsprühgranulation nachgelagerte Verfahrensschritte, wie Pelletieren und/oder Granulieren, da am Ausgang des Wirbelschichtsprühgranulationstrockners bereits ein festes rieselfähiges Mehrkomponentengranulat vorliegt, welches direkt als vollwertiger Dünger eingesetzt werden kann.

In einer weiteren Ausgestaltungsform des Verfahrens weist oder weisen das Adsorptionsmittel und/oder das beladene Adsorptionsmittel Aluminiumsilikat, Zeolith, Aktivkohle, Biokohle und/oder Nanopartikel auf.

Somit kann die Art des ausgewählten Adsorptionsmittels an die Zusammensetzung des flüssigen biogenen Reststoffes, die später gewünschten bodenverbessernden Eigenschaften und die Menge des zu adsorbierenden Nährstoffes, Ammoniak, angepasst werden.

Ein "Aluminiumsilikat" (auch "Alumosilikat" oder "Aluminosilikat" genannt) ist insbesondere ein Mineral und/oder eine chemische Verbindung aus der Gruppe der Silikate. Ein Aluminiumsilikat ist insbesondere Bestandteil der Erdkruste.

Bei einem "Zeolith" handelt es sich um ein kristallines Alumosilikat. Ein Zeolith kann insbesondere natürlich vorkommen und/oder synthetisch hergestellt werden. Unter einem Zeolith wird auch ein modifiziertes und/oder vorbehandeltes Zeolith verstanden. Ein Zeolith weist insbesondere Aluminium- und Siliziumoxid auf. Ein Zeolith besteht insbesondere aus einem mikroporösen Grundgerüst aus AlO₄⁻- und SiO₄-Tetraeder, wobei die Aluminium- und Siliziumatome untereinander durch Sauerstoffatome verbunden sind.

"Aktivkohle" ist insbesondere poröser, feinkörniger Kohlenstoff mit einer großen inneren Oberfläche. Aktivkohle liegt insbesondere granuliert oder gepresst vor.

"Biokohle" (auch "Pflanzenkohle") ist insbesondere eine Kohle, welche durch pyrolytische Verkohlung rein pflanzlicher Ausgangsstoffe hergestellt wurde. Biokohle ist beispielsweise aus Holz oder Kokosnussschalen hergestellt.

Unter "Nanopartikeln" werden insbesondere Verbünde von einigen wenigen bis einigen Tausend Atomen oder Molekülen verstanden, welche üblicherweise eine Größe von 1 bis 100 Nanometer aufweisen. Nanopartikel können insbesondere auch natürlich entstehen und/oder synthetisch hergestellt werden. Bei Nanopartikeln handelt es sich beispielsweise um kohlenstoffhaltige Nanopartikel, Halbmetall-Oxide und/oder kohlenstoffhaltige Nanopartikel in einer bestimmten Form, wie beispielsweise einer Nanoröhre als länglicher Hohlkörper.

Um Stickstoff rückzuführen und im Wesentlichen die originäre Stickstoffkonzentration zu erreichen, wird Ammoniak in der Trocknungsluft in einem Anteil von 50 % bis 99 %, bevorzugt von 60 % bis 85 % aus der Trocknungsluft an das Adsorptionsmittel gebunden und/oder in das feste rieselfähige Mehrkomponentengranulat überführt.

In einer weiteren Ausgestaltungsform des Verfahrens wird beim gemeinsamen Trocknen des flüssigen biogenen Reststoffes oder des vorgetrockneten biogenen Reststoffes und des Adsorptionsmittels und/oder des beladenen Adsorptionsmittels zusätzlich eine weitere organische Substanz zugegeben.

Dadurch können die bodenverbessernden Eigenschaften durch Zugabe der organischen Substanz gezielt weiter verbessert und/oder verändert werden.

Die "weitere organische Substanz" weist insbesondere bodenverbessernde Eigenschaften auf. Bei der weiteren organischen Substanz handelt es sich beispielsweise um einen Huminstoff oder eine Huminsäure.

In einem zusätzlichen Aspekt der Erfindung wird die Aufgabe gelöst durch ein vollwertiges Düngergranulat, gemäß Anspruch 13, wobei das Düngergranulat nach einem zuvor beschriebenen Verfahren, gemäß Anspruch 3, hergestellt ist.

Somit wird ein trockenes, nährstoffvollwertiges, rieselfähiges Düngergranulat bereitgestellt, welches lediglich einen Verfahrensschritt als kombinierte Trocknung und Adsorption oder zwei Verfahrensschritte der Trocknung und nachgeschalteten Abluftbehandlung in einer Adsorptionsstufe benötigt.

Somit wird ein ökonomisches und ökologisch vorteilhaftes vollwertiges Düngergranulat bereitgestellt.

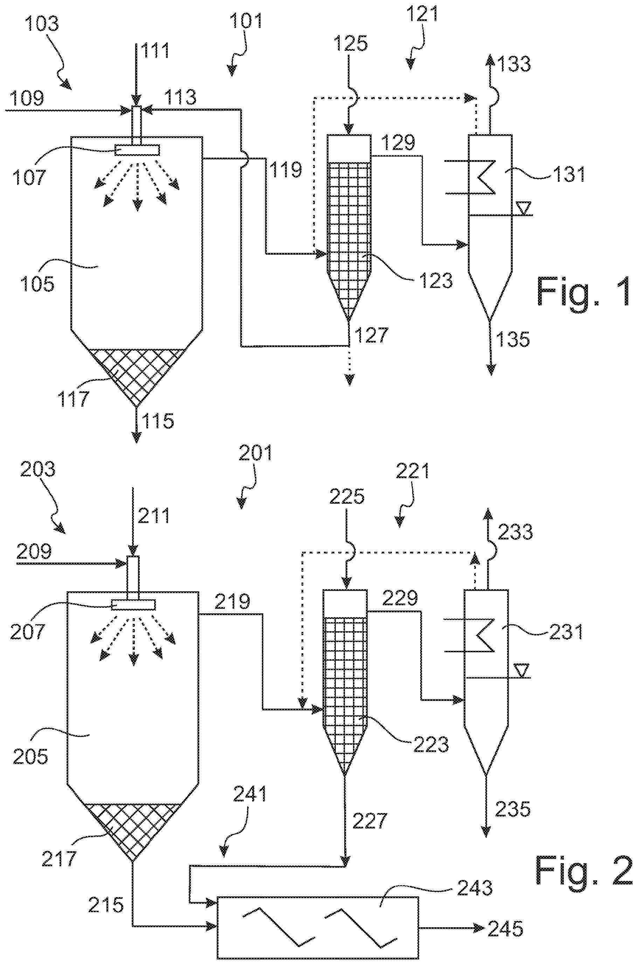

Im Weiteren wird die Erfindung anhand von Ausführungsbeispielen näher erläutert. Es zeigen
- Figur 1: eine stark schematische Schnittdarstellung einer Düngerherstellungsanlage mit einem Wirbelschichtsprühtrockner und einer nachgeschalteten Adsorptionskolonne zur Abluftaufbereitung und Rückführung des beladenen Zeoliths, und
- Figur 2: eine stark schematische Schnittdarstellung einer Düngerherstellungsanlage mit einem Wirbelschichtsprühtrockner, einer Adsorptionskolonne zur Abluftaufbereitung und einem beheizten Trommelmischer.

Eine Düngerherstellungsanlage 101 ist zweistufig aus einer Sprühtrocknung 103 und einer Abluftaufbereitung 121 ausgestaltet. In der Sprühtrocknung 103 wird ein Wirbelschichtsprühtrockner 105 verwendet, welchem über eine Zulaufleitung 109 Gülle, über eine Zulaufleitung 111 Trockenluft und über eine Rückführleitung 113 beladenes Zeolith zugeführt werden. Der Wirbelschichtsprühtrockner 105 weist oben im Trocknungsraum einen Rotationszerstäuber 107 und unten eine Abzugsleitung 115 für ein hergestelltes Düngergranulat auf. Die Temperatur im Wirbelschichtsprühtrockner 105 beträgt 95 °C.

Die Abluftaufbereitung 121 weist eine Adsorptionskolonne 123 sowie einen Kondensator 131 auf. Im oberen Bereich wird der Adsorptionskolonne 121 über eine Zulaufleitung 125 unbeladenes Zeolith als Adsorptionsmittel zugeführt.

Im unteren Bereich der Adsorptionskolonne 123 ist eine Abzugsleitung 127 für beladenes Zeolith angeordnet, welche mit der Rückführleitung 113 für beladenes Zeolith in den Wirbelschichtsprühtrockner 105 verbunden ist. Die Abluftleitung 119 aus dem Wirbelschichtsprühtrockner 105 ist in die Adsorptionskolonne 123 geführt.

Des Weiteren weist die Adsorptionskolonne 123 eine Abluftleitung 129 auf, welche in einen Kondensator 131 geführt ist. Der Kondensator 131 weist eine Abluftleitung 133 auf, durch welche gereinigte Abluft in die Umgebung abgegeben oder optional in die Adsorptionskolonne 123 rückgeführt wird. Des Weiteren weist der Kondensator 131 eine Abzugsleitung 135 für kondensiertes Wasser auf.

Zur Herstellung des Düngergranulates 117 werden über die Zulaufleitung 109 Gülle, die Zulaufleitung 111 Trockenluft und die Rückführleitung 113 beladenes Zeolith kontinuierlich dem Wirbelschichtsprühtrockner 105 zugeführt, wobei mittels des Rotationszerstäubers 107 eine feine Dispergierung und intensive Durchmischung erfolgt. Dadurch tritt die Gülle mit dem beladenen Zeolith in Kontakt und die organischen Substanzen der Gülle werden physikalisch an das beladene Zeolith gebunden. Hierbei wird das beladene Zeolith von der Gülle umhüllt und beschichtet. Zudem wird das in der Adsorptionskolonne 123 mit Ammoniak beladene Zeolith aufgrund der Rückführung mittels der Rückführungsleitung 113 sehr schnell von der Gülle umhüllt, sodass das adsorbierte Ammoniak trotz des Trocknens in dem Wirbelschichtsprühtrockner 105 nur zu einem geringen Anteil von 40 % in die Trockenluft übergeht.

Das gebildete Düngergranulat aus Gülle mittels der organischen Substanz verbunden mit dem geladenen Zeolith wird im unteren Bereich des Wirbelschichtsprühtrockners 105 mittels der Abzugsleitung 115 abgezogen und liegt direkt als granuliertes und verkaufsfähiges Produkt vor.

Während der Sprühtrocknung 103 im Wirbelsprühtrockner 105 tritt kontinuierlich mit Ammoniak und Wasserdampf beladene Abluft über die Abluftleitung 119 aus dem Wirbelschichtsprühtrockner 105 in die Adsorptionskolonne 123 ein. Die Adsorptionskolonne weist eine Temperatur von 40 °C auf. In der Adsorptionskolonne 123 wird das kontinuierlich zugeführte unbeladene Zeolith zunehmend mit Ammoniak beladen, wobei eine mittlere Beladung von 3,3 mg N (Ammoniak) pro g Zeolith erreicht wird. Das mit Ammoniak beladene Zeolith wird vollständig kontinuierlich über die Rückführleitung 113 dem Wirbelschichtsprühtrockner 105 zugefügt. Dadurch wird der in die Trocknungsluft übergegangene Ammoniak in seiner ursprünglichen Konzentration vollständig in das Düngergranulat 117 überführt.

Die Abluft aus der Adsorptionskolonne 123 wird mittels der Abluftleitung 129 in den Kondensator 131 überführt, in welchem der Wasserdampf in der Abluft kondensiert und mittels der Abzugsleitung 135 das Wasser abgeführt wird. Am Kopf des Kondensators 131 verlässt über die Abluftleitung 133 gereinigte Abluft den Kondensator 131.

In einer Alternative weist eine Düngerherstellungsanlage 201 eine Trocknung 203 mit einem Wirbelschichtsprühtrockner 205 und eine Nachtrocknung 241 mit einem beheizten Trommelmischer 243 sowie eine Abluftaufbereitung 221 mit einer Adsorptionskolonne 223 und einem Kondensator 231 auf.

Der Wirbelschichtsprühtrockner 205 weist eine Zulaufleitung 209 für Gülle, eine Zulaufleitung 211 für Trockenluft und im Inneren oben einen Rotationszerstäuber 209 auf. Im unteren Bereich des Wirbelschichtsprühtrockners 205 ist eine Abzugsleitung 215 für teilgetrocknete Gülle angeordnet. Die Abluft aus dem Wirbelschichtsprühtrockner 205 wird über die Abluftleitung 219 der Adsorptionskolonne 223 zugeführt.

Die Adsorptionskolonne 223 und der Kondensator 231 sind wie zuvor beschrieben ausgeführt. Jedoch wird das beladene Zeolith nicht in dem Wirbelschichtsprühtrockner 205 zurückgeführt, sondern die Abzugsleitung 227 für beladenes Zeolith wird in den beheizten Trommelmischer 243 geführt. Ebenso wird die Abzugsleitung 215 für teilgetrocknete Gülle 217 aus dem Wirbelschichtsprühtrockner 205 in den beheizten Trommelmischer 243 geführt. Der beheizte Trommelmischer 243 als Nachtrocknung 241 weist eine Abzugsleitung 245 für das Düngergranulat auf.

Zur Herstellung des Düngergranulats 245 wird dem Wirbelschichtsprühtrockner 205 Gülle mittels der Zulaufleitung 209 und Trockenluft mittels der Zuleitung 211 kontinuierlich zugeführt und mittels des Rotationszerstäubers 207 dispergiert und vermischt. Hierbei wird die dispergierte Gülle bei einer Temperatur von 130 °C vorgetrocknet und als teilgetrocknete Gülle 217 über die Abzugsleitung 215 dem beheizten Trommelmischer 243 zugeführt.

Des Weiteren wird die Abluft aus dem Wirbelschichtsprühtrockner 205 kontinuierlich über die Abluftleitung 219 abgeführt und der Adsorptionskolonne 223 zugeführt. Aufgrund der Vortrocknung in dem Wirbelschichtsprühtrockner 205 ist Stickstoff partiell als Ammoniak aus der Gülle in die Abluft übergegangen und mit der Abluft der Adsorptionskolonne 223 zugeführt worden. Der Ammoniak bindet in der Adsorptionskolonne 223 bei einer Temperatur von 30 °C mit dem kontinuierlich über die Zulaufleitung 225 zugeführten unbeladenen Zeolith, wobei das beladene Zeolith über die Abzugsleitung 227 für die Nachtrocknung 241 dem beheizten Trommelmischer 243 zugeführt wird.

Der beheizte Trommelmischer 243 weist eine Temperatur von 80 °C auf und vermischt das mit Ammoniak beladene Zeolith und die teilgetrocknete Gülle 217, sodass die organischen Substanzen der teilgetrockneten Gülle physikalisch an das beladene Zeolith binden und dadurch das Düngergranulat gefertigt wird, welches über die Abzugsleitung 245 als vollwertiges verkaufsfertiges Produkt abgezogen wird. Die weitere Funktion der Adsorptionskolonne 223 und des Kondensators 231 entspricht der zuvor beschriebenen Adsorptionskolonne 123 und des Kondensator 131.

### Bezugszeichenliste

101 Düngerherstellungsanlage
103 Sprühtrocknung
105 Wirbelschichtsprühtrockner
107 Rotationszerstäuber
109 Zulaufleitung Gülle
111 Zulaufleitung Trockenluft
113 Rückführleitung beladenes Zeolith
115 Abzugsleitung Düngergranulat
117 Düngergranulat
119 Abluftleitung aus Wirbelschichtsprühtrockner
121 Abluftaufbereitung
123 Adsorptionskolonne
125 Zulaufleitung unbeladenes Zeolith
127 Abzugsleitung beladenes Zeolith
129 Abluftleitung aus Adsorptionskolonne
131 Kondensator
133 Abluftleitung aus Kondensator
135 Abzugsleitung Wasser
201 Düngerherstellungsanlage
203 Trocknung
205 Wirbelschichtsprühtrockner
207 Rotationszerstäuber
209 Zulaufleitung Gülle
211 Zulaufleitung Trockenluft
215 Abzugsleitung teilgetrocknete Gülle
217 teilgetrocknete Gülle
219 Abluftleitung aus Wirbelschichtsprühtrockner
221 Abluftaufbereitung
223 Adsorptionskolonne
225 Zulaufleitung unbelandenes Zeolith
227 Abzugsleitung beladenes Zeolith
229 Abluftleitung aus Adsorptionskolonne
231 Kondensator
233 Abluftleitung aus Kondensator
235 Abzugsleitung Wasser
241 Nachtrockung
243 beheizter Trommelmischer
245 Abzugsleitung Düngergranulat

## Patentansprüche

1. Festes rieselfähiges Mehrkomponentengranulat (115, 245), wobei das feste rieselfähige Mehrkomponentengranulat einen biogenen Reststoff mit organischer Substanz und ein Adsorptionsmittel aufweist, wobei das Adsorptionsmittel Zeolith aufweist, und das Zeolith mit einem Nährstoff beladen ist, wobei der Nährstoff Ammoniak ist, und die organische Substanz des biogenen Reststoffes mit dem Zeolith physikalisch verbunden ist, wobei das feste rieselfähige Mehrkomponentengranulat eine Korngröße in einem Bereich von 250 um bis 10 mm aufweist, **dadurch gekennzeichnet, dass** das Zeolith eine Ammoniak-Beladung von wenigstens 60 % des zuvor in einer Abluft vorhandenen Stickstoffs aufweist und das beladene Zeolith von dem biogenen Reststoff mittels der organischen Substanz umhüllt ist, sodass das feste rieselfähige Mehrkomponentengranulat als mit Nährstoffen vollwertig angereicherter Dünger vorliegt.

2. Festes rieselfähiges Mehrkomponentengranulat nach Anspruch 1, **dadurch gekennzeichnet, dass** das Zeolith eine Ammoniak-Beladung von wenigstens 1,5 mg N / g Zeolith aufweist.

3. Verfahren zum Herstellen eines festen rieselfähigen Mehrkomponentengranulates aus einem flüssigen biogenen Reststoff, wobei der flüssige biogene Reststoff organische Substanz und Nährstoffe aufweist, mit folgendem Schritt
- zumindest teilweises gemeinsames Trocknen (103, 241) des flüssigen biogenen Reststoffes und eines Adsorptionsmittels unter Zuführen einer Trocknungsluft in einem Trocknungsraum (105, 243) bei einer Temperatur in einem Bereich zwischen 60 °C bis 250 °C, bevorzugt zwischen 80° C und 160 °C, wobei der flüssige biogene Reststoff mittels einer Zerstäubungsvorrichtung (107, 207) in dem Trocknungsraum versprüht und eine Wirbelschichtsprühgranulation (105, 205) des flüssigen biogenen Reststoffes durchgeführt wird, das Adsorptionsmittel mit dem bei dem Trocknen in die Trocknungsluft übergegangenen Ammoniak aus der Trocknungsluft beladen wird, und die organische Substanz des trocknenden biogenen Reststoffes mit dem beladenen Adsorptionsmittel physikalisch verbunden und das beladene Adsorptionsmittel von dem biogenen Reststoff mittels der organischen Substanz umhüllt wird, sodass ein festes rieselfähiges Mehrkomponentengranulat (115, 245) vorliegt, wobei das feste rieselfähige Mehrkomponentengranulat eine Korngröße in einem Bereich von 250 um bis 10 mm aufweist.

4. Verfahren nach Anspruch 3, **dadurch gekennzeichnet, dass** ein Vortrocknen (203) des flüssigen biogenen Reststoffes vor dem gemeinsamen Trocknen erfolgt, sodass ein vorgetrockneter biogener Reststoff (217) vorliegt.

5. Verfahren nach einem der Ansprüche 3 oder 4, **gekennzeichnet durch** ein Abführen der Trocknungsluft aus dem Trocknungsraum und/oder ein Binden eines bei dem Vortrocknen in die Trocknungsluft übergegangenen Ammoniak aus der Trocknungsluft an das Adsorptionsmittel, so dass ein beladenes Adsorptionsmittel vorliegt.

6. Verfahren nach Anspruch 5, **gekennzeichnet durch** ein Rückführen des beladenen Adsorptionsmittels und Mischen mit dem flüssigen biogenen Reststoff in dem Trocknungsraum (105), sodass das feste rieselfähiges Mehrkomponentengranulat als mit Nährstoffen vollwertig angereicherter Dünger (115) vorliegt.

7. Verfahren nach Anspruch 5, **dadurch gekennzeichnet, dass** der vorgetrocknete biogenen Reststoff und das beladene Adsorptionsmittel in einem Nachtrocknungsraum (243) gemischt und/oder gemeinsam getrocknet werden.

8. Verfahren nach einem der Ansprüche 3 bis 7, **dadurch gekennzeichnet, dass** das gemeinsame Trocknen des flüssigen biogenen Reststoffes oder des vorgetrockneten biogenen Reststoffes und des Adsorptionsmittels und/oder des beladenen Adsorptionsmittels bei einer Temperatur in einem Bereich von 60°C bis 150°C, bevorzugt von 80°C bis 100°C erfolgt.

9. Verfahren nach einem der Ansprüche 3 bis 8, **dadurch gekennzeichnet, dass** das Adsorptionsmittel und/oder das beladene Adsorptionsmittel in den Trocknungsraum (105) oder in den Nachtrocknungsraum (243) kontinuierlich oder diskontinuierlich zugeführt wird oder werden.

10. Verfahren nach einem der Ansprüche 3 bis 9, **dadurch gekennzeichnet, dass** das Adsorptionsmittel und/oder das beladene Adsorptionsmittel Aluminiumsilikat, Zeolith, Aktivkohle, Biokohle und/oder Nanopartikel aufweist oder aufweisen.

11. Verfahren nach einem der Ansprüche 3 bis 10, **dadurch gekennzeichnet, dass** Ammoniak in der Trocknungsluft in einem Anteil von 50 % bis 99 %, bevorzugt von 60 % bis 85 % aus der Trocknungsluft an das Adsorptionsmittel gebunden und/oder in das feste rieselfähige Mehrkomponentengranulat überführt wird.

12. Verfahren nach einem Ansprüche 3 bis 11, **dadurch gekennzeichnet, dass** beim gemeinsamen Trocknen des flüssigen biogenen Reststoffes oder des vorgetrockneten biogenen Reststoffes und des Adsorptionsmittels und/oder des beladenen Adsorptionsmittels zusätzlich eine weitere organische Substanz zugegeben wird.

13. Vollwertiges Düngergranulat (115, 245), wobei das Düngergranulat nach einem Verfahren nach einem der Ansprüche 3 bis 12 hergestellt ist.

## Claims

1. Solid-flowable multicomponent granulate (115, 245), wherein the solid-flowable multicomponent granulate comprises a biogenic residue with an organic substance and an adsorption agent, wherein the adsorption agent comprises a zeolite, and wherein the zeolite is loaded with a nutrient, wherein the nutrient is ammonia, and wherein the organic substance of the biogenic residue is physically bonded to the zeolite, the solid-flowable multicomponent granulate having a particle size in the range from 250 µm to 10 mm, **characterized in that** the zeolite has an ammonia loading of at least 60% of the nitrogen previously present in exhaust air and the loaded zeolite is coated with the biogenic residue by means of the organic substance, so that the solid-flowable multicomponent granulate is present as a completely nutrient-enriched fertilizer.

2. Solid-flowable multicomponent granulate according to claim 1, **characterized in that** the zeolite has an ammonia loading of at least 1.5 mg N/g zeolite.

3. Method for producing a solid, free-flowing multicomponent granulate from a liquid biogenic residue, the liquid biogenic residue containing an organic substance and nutrients, with the following step
- at least partial, joint drying (103, 241) of the liquid biogenic residue and an adsorption agent by introducing drying air in a drying chamber (105, 243) at a temperature in the range between 60°C and 250°C, preferably between 80°C and 160°C, wherein the liquid biogenic residue is sprayed into the drying chamber by means of an atomizing device (107, 207), and fluidized-bed spray granulation (105, 205) of the liquid biogenic residue is carried out, the adsorption agent is loaded with ammonia from the drying air which has been transferred into the drying air during drying, and the organic substance of the biogenic residue is dried being physically connected to the loaded adsorption agent, and the loaded adsorption agent is coated with the biogenic residue by means of the organic substance, so that a solid-flowable multicomponent granulate (115, 245) is present, wherein the solid-flowable multicomponent granulate has a particle size in the range from 250 µm to 10 mm.

4. Method according to claim 3, **characterized in that** pre-drying (203) of the liquid biogenic residue is carried out prior to common drying, so that a pre-dried biogenic residue (217) is present.

5. Method according to any one of claims 3 or 4, **characterized by** evacuating the drying air from the drying chamber and/or binding an ammonia from the drying air which has been transferred into the drying air during pre-drying to the adsorption agent, so that a loaded adsorption agent is present.

6. Method according to claim 5, **characterized by** returning the loaded adsorption agent and mixing with the liquid biogenic residue in the drying chamber (105) so that the solid-flowable multicomponent granulate is present as a completely nutrient-enriched fertilizer (115).

7. Method according to claim 5, **characterized in that** the pre-dried biogenic residue and the loaded adsorption agent are mixed in a post-drying chamber (243) and/or dried together.

8. Method according to any one of claims 3 to 7, **characterized in that** the joint drying of liquid biogenic residue or pre-dried biogenic residue and adsorption agent and/or loaded adsorption agent is carried out at a temperature in the range from 60°C to 150°C, preferably from 80°C to 100°C.

9. Method according to any one of claims 3 to 8, **characterized in that** the adsorption agent and/or loaded adsorption agent is/are introduced into the drying chamber (105) or post-drying chamber (243) continuously or discontinuously.

10. Method according to any one of claims 3 to 9, **characterized in that** the adsorption agent and/or loaded adsorption agent comprises or comprise aluminium silicate, zeolite, activated carbon, biochar and/or nanoparticles.

11. Method according to any one of claims 3 to 10, **characterized in that** the ammonia in the drying air is bound to the adsorption agent and/or transferred into the free-flowing solid multicomponent granulate in an amount of 50 % to 99 %, preferably 60 % to 85 %.

12. Method according to any one of claims 3 to 11, **characterized in that,** during the joint drying of the liquid biogenic residue or pre-dried biogenic residue and the adsorption agent and/or loaded adsorption agent, a further organic substance is additionally added.

13. Complete fertilizer granules (115, 245), wherein the fertilizer granules are produced by a method according to any one of claims 3 to 12.

## Revendications

1. Granulat multicomposant solide fluide (115, 245), le granulat multicomposant solide fluide présentant un résidu biogène avec une substance organique et un agent d'adsorption, l'agent d'adsorption présentant une zéolite, et la zéolite étant chargée avec un nutriment, le nutriment étant l'ammoniac, et la substance organique du résidu biogène étant physiquement reliée à la zéolite, le granulat multicomposant solide fluide présentant une granulométrie dans une plage allant de 250 µm à 10 mm, **caractérisé en ce que** la zéolithe présente une charge en ammoniac d'au moins 60 % de l'azote présent auparavant dans un air d'échappement et la zéolithe chargée est enrobée par le résidu biogène au moyen de la substance organique, de telle sorte que le granulat multicomposant solide fluide est présent sous forme d'engrais complètement enrichi en nutriments.

2. Granulat multicomposant solide fluide selon la revendication 1, **caractérisé en ce que** la zéolite présente une charge en ammoniac d'au moins 1,5 mg de N/g de zéolite.

3. Procédé de fabrication d'un granulat multicomposant solide fluide à partir d'un résidu biogène liquide, le résidu biogène liquide présentant une substance organique et des nutriments, avec l'étape suivante
- le séchage au moins partiel commun (103, 241) du résidu biogène liquide et d'un agent d'adsorption en introduisant un air de séchage dans une chambre de séchage (105, 243) à une température dans une plage comprise entre 60 °C et 250 °C, de préférence entre 80 °C et 160 °C, le résidu biogène liquide étant pulvérisé au moyen d'un dispositif d'atomisation (107, 207) dans la chambre de séchage, et une granulation par pulvérisation en lit fluidisé (105, 205) du résidu biogène liquide étant réalisée, l'agent d'adsorption étant chargé avec l'ammoniac provenant de l'air de séchage qui a été transféré dans l'air de séchage lors du séchage, et la substance organique du résidu biogène en cours de séchage étant physiquement reliée à l'agent d'adsorption chargé, et l'agent d'adsorption chargé étant enrobé par le résidu biogène au moyen de la substance organique, de telle sorte qu'un granulat multicomposant solide fluide (115, 245) est présent, le granulat multicomposant solide fluide présentant une granulométrie dans une plage allant de 250 µm à 10 mm.

4. Procédé selon la revendication 3, **caractérisé en ce qu'**un préséchage (203) du résidu biogène liquide est effectué avant le séchage commun, de telle sorte qu'un résidu biogène préséché (217) est présent.

5. Procédé selon l'une quelconque des revendications 3 ou 4, **caractérisé par** une évacuation de l'air de séchage de la chambre de séchage et/ou une liaison d'un ammoniac provenant de l'air de séchage qui a été transféré dans l'air de séchage lors du préséchage à l'agent d'adsorption, de telle sorte qu'un agent d'adsorption chargé est présent.

6. Procédé selon la revendication 5, **caractérisé par** un retour de l'agent d'adsorption chargé et le mélange avec le résidu biogène liquide dans la chambre de séchage (105) de telle sorte que le granulat multicomposant solide fluide est présent sous forme d'engrais complètement enrichi en nutriments (115).

7. Procédé selon la revendication 5, **caractérisé en ce que** le résidu biogène préséché et l'agent d'adsorption chargé sont mélangés dans une chambre de post-séchage (243) et/ou séchés ensemble.

8. Procédé selon l'une quelconque des revendications 3 à 7, **caractérisé en ce que** le séchage commun du résidu biogène liquide ou du résidu biogène préséché et de l'agent d'adsorption et/ou de l'agent d'adsorption chargé est effectué à une température dans une plage allant de 60 °C à 150 °C, de préférence de 80 °C à 100 °C.

9. Procédé selon l'une quelconque des revendications 3 à 8, **caractérisé en ce que** l'agent d'adsorption et/ou l'agent d'adsorption chargé est ou sont introduit(s) dans la chambre de séchage (105) ou dans la chambre de post-séchage (243) de manière continue ou discontinue.

10. Procédé selon l'une quelconque des revendications 3 à 9, **caractérisé en ce que** l'agent d'adsorption et/ou l'agent d'adsorption chargé présente ou présentent du silicate d'aluminium, de la zéolithe, du charbon actif, du biochar et/ou des nanoparticules.

11. Procédé selon l'une quelconque des revendications 3 à 10, **caractérisé en ce que** l'ammoniac dans l'air de séchage est relié à l'agent d'adsorption et/ou transféré dans le granulat multicomposant solide fluide en une proportion de 50 % à 99 %, de préférence de 60 % à 85 %.

12. Procédé selon l'une quelconque des revendications 3 à 11, **caractérisé en ce que,** lors du séchage commun du résidu biogène liquide ou du résidu biogène préséché et de l'agent d'adsorption et/ou de l'agent d'adsorption chargé, une autre substance organique est en outre ajoutée.

13. Granulat d'engrais complet (115, 245), le granulat d'engrais étant produit par un procédé selon l'une quelconque des revendications 3 à 12.
